# FASCICULE DE BREVET EUROPEEN

(11) **EP 1 101 186 B1**
(45) Date de publication et mention de la délivrance du brevet: **16.07.2008**
(21) Numéro de dépôt: 99942945.9
(22) Date de dépôt: 09.09.1999
(51) Int. Cl.: G06K 7/00

(54) **DETECTEUR DE FUITE A LA TERRE POUR LECTEUR DE CARTE A MEMOIRE**
ERDLECKDETEKTOR FÜR SPEICHERKARTENLESER
LEAKAGE DETECTOR FOR SMART CARD READER

(30) Priorité: 09.09.1998 FR 9811389
(43) Date de publication de la demande: 23.05.2001
(73) Titulaire: Ascom Monétel SA, 07500 Guilherand-Granges (FR)
(72) Inventeur: LAFONT, Gérard, Maurice, F-26000 Valence (FR)
(74) Mandataire: de Beaumont, Michel
(86) Numéro de dépôt international: PCT/FR1999/002149
(87) Numéro de publication internationale: WO 2000/014673

(56) Documents cités:
- FR-A- 2 693 014

## Description

La présente invention concerne les lecteurs de cartes à mémoire et en particulier la protection des usagers de lecteurs de cartes à mémoire alimentés par une ligne téléphonique.

Certains lecteurs de cartes à mémoire, servant par exemple à recevoir des cartes de paiement dans des téléphones publics, sont alimentés par l'intermédiaire de la ligne téléphonique. Plus spécifiquement, ces lecteurs sont généralement alimentés par une batterie chargée en utilisant les tensions présentes sur la ligne téléphonique.

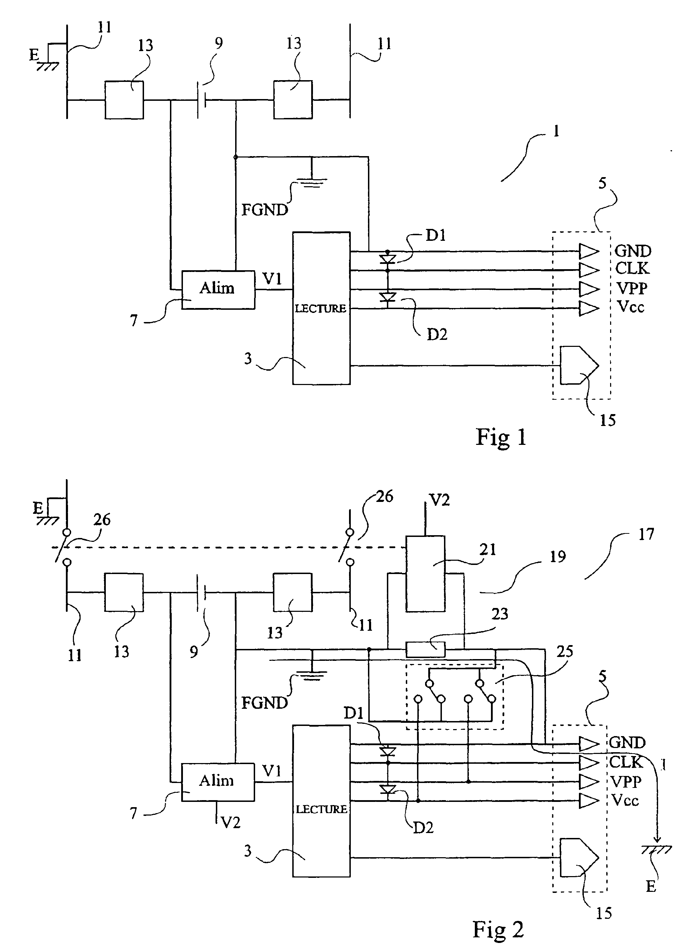

La figure 1 représente schématiquement un lecteur de cartes à mémoire 1 de téléphone public, comprenant un circuit de lecture 3 relié à une tête de lecture 5. Un circuit d'alimentation 7, fournissant une tension V1 au circuit de lecture 5, est alimenté par une batterie 9. La batterie 9 est chargée par un circuit de charge 13 utilisant la différence de potentiel existant entre les fils d'une ligne téléphonique 11. L'un des fils de la ligne 11 est généralement relié à la terre E au niveau d'un central.

La tête de lecture 5 représentée comporte une tête magnétique 15 pour la lecture de pistes magnétiques, et un ensemble de contacts pour la lecture d'une carte à puce. Parmi les contacts, on a représenté deux contacts d'alimentation de la carte à mémoire VCC et GND, un contact VPP de programmation de la carte à mémoire, et un contact d'horloge CLK. D'autres contacts permettant d'échanger des données numériques sont prévus le cas échéant. Des diodes d'écrêtage D1 et D2 relient le contact d'horloge CLK aux contacts d'alimentation.

Tant qu'aucune carte n'est introduite dans le lecteur, ce dernier est dans un mode d'attente, et le circuit de lecture 3 est inactivé de manière qu'aucun signal électrique ne soit fourni à la tête de lecture 5. Un détecteur de fin de course (non représenté) permet de détecter l'introduction d'une carte dans le lecteur. Un intervalle de temps prédéterminé après cette introduction, le lecteur passe en mode normal, et le circuit de lecture 3 est activé pour établir les tensions d'alimentation sur les contacts GND et VCC, et échanger les signaux requis avec la carte à puce introduite.

La masse FGND du lecteur 1 flotte entre les potentiels des deux fils de la ligne téléphonique 11 du fait du comportement normal des circuits de charge 13. Elle peut donc dans certaines conditions présenter une différence de potentiel importante par rapport à la terre E, notamment lors de l'arrivée de trains de sonnerie. Certains éléments de la tête de lecture 5, comme les contacts ou le blindage de la tête magnétique, qui sont à des potentiels peu différents de la masse, peuvent ainsi être portés à des potentiels élevés par rapport à la terre. Si un usager insère dans le lecteur un objet conducteur, par exemple une carte dont la surface est recouverte d'une pellicule métallique sur laquelle est gravée un hologramme, en contact avec un de ces éléments, il risque d'être électrocuté. Afin de protéger l'usager, il a été proposé d'interposer un isolement galvanique entre la ligne téléphonique et le lecteur de cartes à mémoire. Une telle solution est complexe et coûteuse à mettre en oeuvre car cela implique que l'on assure un isolement de 1,5 kV tout en restant capable de transmettre de la puissance à de nombreux circuits électriques.

Un objet de la présente invention est de prévoir un circuit de protection de l'usager particulièrement simple et efficace.

Pour atteindre cet objet, la présente invention prévoit un dispositif de lecture de carte à mémoire, comprenant un circuit de lecture alimenté depuis une ligne extérieure, une tête de lecture, et un commutateur commandé pour relier ou non la tête de lecture à un circuit de détection de courant propre à détecter un courant de fuite à la terre par la tête de lecture, et à couper la ligne extérieure.

Selon un mode de réalisation de la présente invention, la ligne extérieure est une ligne téléphonique.

Selon un mode de réalisation de la présente invention, le dispositif de lecture de carte à mémoire a un mode d'attente dans lequel le circuit de lecture est inactivé et un mode normal déclenché un intervalle de temps prédéterminé après l'introduction d'un objet dans le dispositif. En mode d'attente, le commutateur relie le circuit de détection de courant à la tête de lecture, et en mode normal, le commutateur est mis dans une position où la tête de lecture est opérationnelle.

Selon un mode de réalisation de la présente invention, le circuit de détection de courant est prévu pour mesurer une tension aux bornes d'une résistance de mesure située entre la masse du dispositif et un noeud relié aux contacts de la tête de lecture durant le mode d'attente.

Selon un mode de réalisation de la présente invention, le circuit de détection de courant est un comparateur différentiel à hystérésis qui comprend :
un premier pont de quatre résistances connectées en série entre une tension d'alimentation et une masse,
un premier comparateur dont l'entrée non-inverseuse est reliée au noeud situé entre la deuxième et la troisième résistance du premier pont, sa sortie étant reliée par une première résistance de mise à niveau haut au noeud situé entre la première et la deuxième résistance du premier pont,
un second pont de quatre résistances connectées en série entre la tension d'alimentation par l'intermédiaire d'une résistance et la masse par l'intermédiaire de la résistance de mesure, le noeud situé entre la troisième et la quatrième résistance du second pont étant relié à l'entrée inverseuse du premier comparateur,
un second comparateur dont l'entrée non-inverseuse est reliée au noeud situé entre la deuxième et la troisième résistance du second pont et dont l'entrée inverseuse est reliée au noeud situé entre la troisième et la quatrième résistance du premier pont, sa sortie étant reliée par une seconde résistance de mise à niveau haut au noeud situé entre la première et la deuxième résistance du second pont, et
une porte NON-ET connectée aux sorties des deux comparateurs et produisant un signal de commande d'ouverture de la ligne extérieure.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente schématiquement et partiellement un lecteur de cartes classique ;
la figure 2 représente schématiquement et partiellement un mode de réalisation de lecteur de cartes muni d'un circuit de protection selon la présente invention ; et
la figure 3 représente un exemple détaillé d'un détecteur de courant de la figure 2.

A la figure 2, un lecteur de cartes 17 de téléphone public comporte une tête de lecture 5 et un circuit de lecture 3 semblables à ceux de la figure 1.

Selon l'invention, un circuit de détection de courant de fuite 19 comprenant un comparateur 21 et une résistance de mesure 23 est intercalé entre le contact de masse GND de la tête de lecture 5, relié au circuit de lecture 3, et la masse FGND du lecteur. Le cas échéant, le circuit de détection 19 est alimenté par une deuxième tension V2 fournie par le circuit d'alimentation 7. Un commutateur 25 est connecté pour, dans une première position (représentée), court-circuiter le circuit de détection 19 et, dans une seconde position, relier les contacts VPP et VCC au contact de masse GND de la tête et du circuit de lecture 5 et 3. Le commutateur 25 est activé, c'est-à-dire mis dans sa première position, comme le circuit de lecture 3, un court intervalle de temps après l'insertion d'une carte.

En mode d'attente, le commutateur 25 est inactivé, c'est-à-dire dans sa seconde position connectant les contacts VCC et VPP au contact GND. Ainsi, si l'un de ces contacts est accidentellement relié à la terre, un courant s'établit, comme cela est illustré par une flèche I, à travers la résistance 23 et la tête 5 entre la terre E et la masse FGND du lecteur. On remarque que si le contact d'horloge CLK est relié à la terre E, le courant de fuite I s'établira à travers l'une des diodes d'écrêtage D1 ou D2.

Lorsque le comparateur 21 détecte l'apparition d'une tension aux bornes de la résistance de mesure 23, il commande l'ouverture de la ligne téléphonique 11 par des interrupteurs 26. Déconnecté de la ligne téléphonique, le lecteur ne présente plus de risque d'électrocution pour l'usager. Le temps nécessaire pour détecter le courant de fuite et pour déconnecter la ligne ne dépasse pas quelques millisecondes, ce qui garantit une bonne protection de l'usager. De plus, on diminue aussi les risques de fuites de courant qui pouvaient endommager les éléments fragiles de la tête de lecture.

Si le circuit de détection 19 ne détecte aucun courant de fuite à la terre par la tête de lecture 5, le commutateur 25 est commuté à sa première position en même temps que le circuit de lecture 3 est activé normalement. La résistance 23 est ainsi court-circuitée afin que la carte insérée soit alimentée convenablement à partir de la masse FGND. Le commutateur 25 est de préférence un relais bistable commandé par impulsions, ce qui permet d'obtenir une consommation de courant minimale. Cette faible consommation permet d'utiliser l'invention dans des dispositifs pour lesquels une faible consommation est indispensable, comme les publiphones.

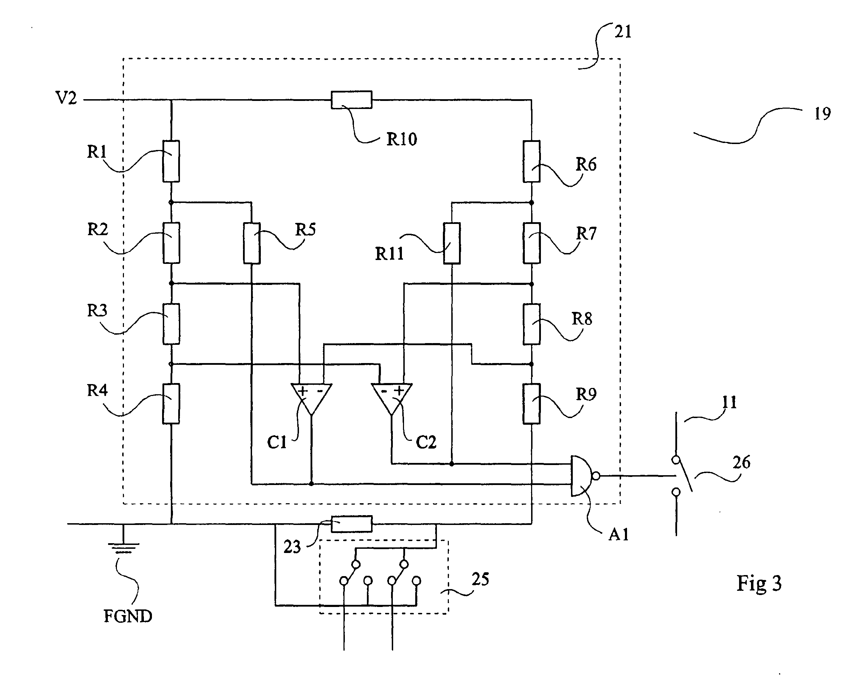

La figure 3 représente un exemple détaillé de comparateur 21 du circuit de détection de courant de fuite 19. Il comprend un premier pont de résistances connectées en série R1, R2, R3 et R4 entre la masse FGND et la tension d'alimentation V2 fournie par le circuit 7. Le noeud situé entre les résistances R1 et R2 est connecté par l'intermédiaire d'une résistance de mise à niveau haut R5 à la sortie d'un comparateur C1 dont l'entrée non-inverseuse est connectée au noeud situé entre les résistances R2 et R3. Il comprend en outre un deuxième pont de résistances R6, R7, R8 et R9 connectées en série entre la tension V2 par l'intermédiaire d'une résistance R10 et la masse FGND par l'intermédiaire de la résistance 23. Le noeud situé entre les résistances R6 et R7 est connecté par l'intermédiaire d'une résistance de mise à niveau haut R11 à la sortie d'un comparateur C2 dont l'entrée non-inverseuse est connectée au noeud situé entre les résistances R7 et R8. L'entrée inverseuse du comparateur C1 est reliée au noeud situé entre les résistances R8 et R9 et l'entrée inverseuse du comparateur C2 est reliée au noeud situé entre les résistances R3 et R4. Les sorties des comparateurs C1 et C2 sont combinées par une porte logique NON-ET A1 pour produire un signal de commande des commutateurs de coupure de ligne 26.

Avec cette configuration, le comparateur 21 présente une hystérésis, c'est-à-dire qu'il commute lorsque la tension aux bornes de la résistance 23 dépasse un premier seuil et ne commute de nouveau que lorsque la tension aux bornes de la résistance 23 atteint un deuxième seuil inférieur au premier. Les valeurs des résistances R1 à R11 ainsi que celle de la résistance 23, sont déterminées en fonction de la différence de potentiel que l'on veut détecter aux bornes de la résistance 23, c'est-à-dire en fonction du courant de fuite que l'on veut détecter.

Les deux comparateurs C1 et C2 servent à détecter à travers la résistance 23 aussi bien un courant de fuite entrant qu'un courant de fuite sortant. La résistance R10 équilibre les courants traversant les branches du comparateur lorsque, en mode normal, la résistance 23 est parcourue par le courant d'alimentation du lecteur.

Bien que la présente invention ait été décrite en relation avec un lecteur de cartes à mémoire de téléphone public, l'homme du métier saura l'adapter avantageusement à tout lecteur de cartes à mémoire dont un élément est susceptible d'être mis en contact avec la terre par l'intermédiaire d'un utilisateur et peut présenter des tensions élevées en mode normal.

## Revendications

1. Dispositif de lecture de carte à mémoire, comprenant un circuit de lecture (3) alimenté depuis une ligne extérieure (11), et une tête de lecture (5), **caractérisé en ce qu'**il comprend un commutateur (25) commandé pour relier ou non la tête de lecture à un circuit de détection de courant (19) propre à détecter un courant de fuite à la terre par la tête de lecture et à couper la ligne extérieure.

2. Dispositif de lecture de carte à mémoire selon la revendication 1, **caractérisé en ce que** la ligne extérieure est une ligne téléphonique.

3. Dispositif de lecture de carte à mémoire selon la revendication 1, **caractérisé en ce qu'**il a :
un mode d'attente dans lequel le circuit de lecture est inactivé et
un mode normal, déclenché un intervalle de temps prédéterminé après l'introduction d'un objet dans le dispositif, dans lequel le circuit de lecture est activé, et **en ce que**
en mode d'attente, le commutateur relie le circuit de détection de courant à la tête de lecture, et
en mode normal, le commutateur est mis dans une position où la tête de lecture est opérationnelle.

4. Dispositif de lecture de carte à mémoire selon la revendication 3, **caractérisé en ce que** le circuit de détection de courant est prévu pour mesurer une tension aux bornes d'une résistance de mesure (23) située entre la masse du dispositif et un noeud relié aux contacts de la tête de lecture durant le mode d'attente.

5. Dispositif de lecture de carte à mémoire selon la revendication 4, **caractérisé en ce que** le circuit de détection de courant est un comparateur différentiel à hystérésis qui comprend :
un premier pont de quatre résistances (R1, R2, R3, R4) connectées en série entre une tension d'alimentation (V2) et une masse (FGND),
un premier comparateur (C1) dont l'entrée non-inverseuse est reliée au noeud situé entre la deuxième (R2) et la troisième (R3) résistance du premier pont, sa sortie étant reliée par une première résistance de mise à niveau haut (R5) au noeud situé entre la première (R1) et la deuxième (R2) résistance du premier pont,
un second pont de quatre résistances (R6, R7, R8, R9) connectées en série entre la tension d'alimentation (V2) par l'intermédiaire d'une résistance (R10) et la masse (FGND) par l'intermédiaire de la résistance de mesure (23), le noeud situé entre la troisième (R8) et la quatrième (R9) résistance du second pont étant relié à l'entrée inverseuse du premier comparateur (C1),
un second comparateur (C2) dont l'entrée non-inverseuse est reliée au noeud situé entre la deuxième (R7) et la troisième (R8) résistance du second pont et dont l'entrée inverseuse est reliée au noeud situé entre la troisième (R3) et la quatrième (R4) résistance du premier pont, sa sortie étant reliée par une seconde résistance de mise à niveau haut (R11) au noeud situé entre la première (R6) et la deuxième (R7) résistance du second pont, et
une porte NON-ET (A1) connectée aux sorties des deux comparateurs et produisant un signal de commande d'ouverture de la ligne extérieure.

## Claims

1. A smart card read device, including a read circuit (3) supplied from an external line (11), and a reading head (5), **characterized in that** it includes a switch (25) controlled to connect or not to connect the reading head to a current detection circuit (19) adapted to detecting a leakage current to the earth through the reading head, and to opening the external line.

2. The smart card read device of claim 1, **characterized in that** the external line is a telephone line.

3. The smart card read device of claim 1, **characterized in that** it has:
a stand-by mode in which the read circuit is deactivated and
a normal mode triggered after a predetermined time following the introduction of an object into the device, and **in that**
in the stand-by mode, the switch connects the current detection circuit to the reading head and,
in normal mode, the switch is put in a position in which the reading head is operating.

4. The smart card read device of claim 3, **characterized in that** the current detection circuit is provided to measure a voltage across a measurement resistor (23) located between the device ground and a node connected to the contacts of the reading head during the stand-by mode.

5. The smart card read device of claim 4, **characterized in that** the current detection circuit is a differential hysteresis comparator that includes:
a first bridge of four resistors (R1, R2, R3, R4) connected in series between a supply voltage (V2) and a ground (FGND),
a first comparator (C1), the non-inverting input of which is connected to the node located between the second (R2) and the third (R3) resistor of the first bridge, its output being connected through a first high-side resistor (R5) to the node located between the first (R1) and the second (R2) resistor of the first bridge,
a second bridge of four resistors (R6, R7, R8, R9) connected in series between the supply voltage (V2) via a resistor (R10) and the ground (FGND) via the measurement resistor (23), the node located between the third (R8) and the fourth (R9) resistor of the second bridge being connected to the inverting input of the first comparator (C1),
a second comparator (C2), the non-inverting input of which is connected to the node located between the second (R7) and the third resistor (R8) of the second bridge and the inverting input of which is connected to the node located between the third (R3) and the fourth (R4) resistor of the first bridge, its output being connected through a second high-side resistor (R11) to the node located between the first (R6) and the second (R7) resistor of the second bridge, and
a NAND gate (A1) connected to the outputs of the two comparators and generating a control signal for opening the external line.

## Patentansprüche

1. Eine Smart- bzw. Chipkartenleseeinrichtung, einschließlich einer Leseschaltung (3), die von einer externen Leitung (11) versorgt wird und einem Lesekopf (5), **gekennzeichnet dadurch dass** sie einen Schalter (25) beinhaltet, der gesteuert wird zum Verbinden oder zum Nicht-Verbinden des Lesekopfs mit einer Stromdetektionsschaltung (19), die angepasst ist zum Detektieren eines Leck-Stroms zu der Erde bzw. Masse durch den Lesekopf und zum Öffnen der externen Leitung.

2. Chipkartenleseeinrichtung nach Anspruch 1, **dadurch gekennzeichnet dass** die externe Leitung eine Telefonleitung ist.

3. Chipkartenleseeinrichtung nach Anspruch 1, **dadurch gekennzeichnet, dass** sie Folgendes besitzt:
einen Stand-By- bzw. Bereitschaftsmodus, in dem die Leseschaltung deaktiviert ist und
einen Normalmodus, der angestoßen bzw. getriggert wird nach einer vorher bestimmten Zeit folgend auf die Einführung von einem Objekt in die Einrichtung und dass
in dem Bereitschaftsmodus der Schalter die Stromdetektionsschaltung mit dem Lesekopf verbindet; und
im Normalmodus der Schalter in eine Position gebracht wird, in der der Lesekopf betrieben wird.

4. Chipkartenleseeinrichtung nach Anspruch 3, **dadurch gekennzeichnet dass** die Stromdetektionsschaltung vorgesehen ist zum Messen einer Spannung über einen Messwiderstand (23), der angeordnet ist zwischen der Erde bzw. Masse der Einrichtung und einem Knoten der mit den Kontakten von dem Lesekopf während des Bereitschaftsmodus verbunden ist.

5. Chipkartenleseeinrichtung nach Anspruch 4, **dadurch gekennzeichnet dass** die Stromdetektionsschaltung ein differentieller Hysterese-Komparator ist, der Folgendes beinhaltet:
eine erste Brücke von vier Widerständen (R1, R2, R3, R4) die in Reihe verbunden sind zwischen einer Versorgungsspannung (V2) und einer Masse bzw. Erde (FGND),
einen ersten Komparator (C1) dessen nicht-invertierender Eingang mit dem Knoten verbunden ist, der zwischen dem zweiten (R2) und dem dritten (R3) Widerstand von der ersten Brücke angeordnet ist, dessen Ausgang durch einen ersten hochseitigen (high-side) Widerstand (R5) mit dem Knoten verbunden ist, der zwischen dem ersten (R1) und dem zweiten (R2) Widerstand von der ersten Brücke angeordnet ist,
eine zweite Brücke von vier Widerständen (R6, R7, R8, R9) die in Reihe verbunden sind zwischen der Versorgungsspannung (V2) über einen Widerstand (R10) und der Masse bzw. Erde (FGND) über den Messwiderstand (23), wobei der Knoten, der zwischen dem dritten (R8) und dem vierten (R9) Widerstand von der zweiten Brücke angeordnet ist, mit dem invertierenden Eingang von dem ersten Komparator (C1) verbunden ist,
einen zweiten Komparator (C2), dessen nicht-invertierender Eingang mit dem Knoten verbunden ist, der zwischen dem zweiten (R7) und dem dritten (R8) Widerstand von der zweiten Brücke angeordnet ist, und
dessen invertierender Eingang mit dem Knoten verbunden ist, der zwischen dem dritten (R3) und dem vierten (R4) Widerstand von der ersten Brücke angeordnet ist, dessen Ausgang verbunden ist, durch einen zweiten hochseitigen Widerstand (R11) mit dem Knoten der zwischen dem ersten (R6) und dem zweiten (R7) Widerstand von der zweiten Brücke angeordnet ist, und
ein NAND Gatter (A1) das verbunden ist mit den Ausgängen von den zwei Komparatoren und ein Steuersignal zum Öffnen der externen Leitung, erzeugt.
